# EUROPEAN PATENT APPLICATION

(11) **EP 3 944 885 A1**
(43) Date of publication of application: **02.02.2022**
(21) Application number: 20188570.4
(22) Date of filing: 30.07.2020
(51) Int. Cl.: B01D 35/143, F01D 17/02

(54) **CONTINUOUS FLOW ENGINE FILTER MANAGEMENT**

(71) Applicant: Siemens Energy Global GmbH & Co. KG, 81739 München (DE)
(72) Inventor: Wiesner, Thomas, 96126 Ermershausen (DE)

(57) **Abstract**

The present invention refers to a continuous flow engine monitoring and controlling method including a pressure drop monitoring providing an improved utilization of such continuous flow engine and simplifying the task of operators of such devices. Furthermore, the present invention refers to a system being adapted to perform such method. Additionally, the present invention refers to a computer program product being utilized to realize such method. Furthermore, the present invention refers to a use of such means to improve the utilization of such continuous flow engine.

## Description

The present invention refers to a method of controlling a continuous flow engine providing improved monitoring characteristics and capabilities. Furthermore, the present invention refers to a system being adapted to utilize such method. Additionally, the present invention refers to a computer program product adapted to perform such method. Furthermore, the present invention refers to a use of such method, system or computer program product to improve the utilization and maintenance of such continuous flow engine.

Continuous flow engines are well established devices utilized in the industry. Examples are compressors as utilized, for example, in large-scale industrial production processes like refineries or turbines like gas turbines or steam turbines utilized in the energy production. Corresponding devices provided a significant increase in utilization the past. Being some experimental possibility many decades ago to the highly reliable and long-lasting device quite difficult to impossible to replace at the current time. While the generic type of engine is available for longthese units are still subject to further developments. Especially, the change from past utilization and monitoring as well as maintenance concepts to modern highly advanced and sophisticated concepts requires a significant change in acquiring and utilizing data in this context. For example, one challenge to be solved is to provide an improved alarm system simplifying the monitoring of corresponding continuous flow engines and increasing their security. Furthermore, improvements to increase the overall benefit of continuous flow engines are still required despite the long history and major developments already implemented in the past.

These problems are solved by the products and methods as disclosed hereafter and in the claims. Further beneficial embodiments are disclosed in the dependent claims and the further description. These benefits can be used to adapt the corresponding solution to specific needs or to solve further problems.

According to one aspect the present invention refers to a method of controlling a continuous flow engine,
wherein the continuous flow engine contains a fluid medium passing through a component of the continuous flow engine, wherein the method contains the steps of
- detecting at least one pressure drop of the fluid medium passing through a component of the continuous flow engine,
- evaluating the pressure drop based on historic pressure drop data and/or simulated pressure drop data, preferably based on historic pressure drop data,
   creating an alarm in case the detected pressure drop deviates from the historic pressure drop data and/or the simulated pressure drop data more than specified pressure drop deviation limit. The term fluid medium as used herein refers to a fluid like a gas or liquid. For typical applications it is preferred that the medium is a gas. The term "pressure drop" as used herein, refers to a pressure difference present before and after an element of the industrial plant. For example, such pressure drop can be located at a valve, a filter, a bottle neck in a distribution line or the like.

Surprisingly, it was noted that monitoring the pressure drop and comparing it to a historic pressure drop data or simulated pressure drop data is a very easy yet beneficial possibility to provide a further improved monitoring of typical continuous flow engines. While such pressure drop is typically considered to be too unspecific to gain a beneficial insight in corresponding engines it was noted that such thinking has to be considered being outdated. Making best use of state of the art possibilities and further features to be included in the next generation continuous flow engines it becomes possible to provide a significant benefit for monitoring and controlling such device.

According to another aspect the present invention refers to a system adapted to be utilized in an inventive method comprising a processor and a non-transitory computer readable medium comprising computer executable instructions that when executed by the processor cause the system to perform operations comprising:
receiving data from a sensor directly or indirectly detecting the pressure drop of a fluid medium passing through a component of the continuous flow engine
evaluating the pressure drop based on historic pressure drop data and/or simulated pressure drop data, preferably based on historic pressure drop data,
creating an alarm in case the detected pressure drop deviates from the historic pressure drop data and/or the simulated pressure drop data more than specified pressure drop deviation limit.

According to a further aspect the present invention refers to an upgrade kit containing an inventive system.

According to another aspect the present invention refers to a computer program product, tangibly embodied in a machine-readable storage medium, including instructions operable to cause a computing entity to execute an inventive method.

According to another aspect the present invention refers to a device for providing an inventive computer program product, wherein the device stores the computer program product and/or provides the computer program product for further use.

According to another aspect the present invention refers to use of an inventive method, an inventive system, or an inventive computer program product to monitor and/or control a continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.
Fig. 1 shows a scheme of an industrial plant containing a continuous flow engine being adapted to utilize the inventive method.
Fig. 2 shows a scheme of the inventive method.

Preferably, the embodiments hereafter contains, unless specified otherwise, at least one processor and/or data storage unit to implement the inventive method.

According to one aspect the present invention refers to a method as specified above.

It was noted that for typical applications it is beneficial to utilize available information to select the pressure drop deviation limit. According to further embodiments it is preferred that the specified pressure drop deviation limit is based on historic pressure drop data. Utilizing historic pressure drop data collected over time is the very easy way to define corresponding limits to monitor such system. Herein, such pressure drop deviation limit can be created automatically by the existing system based on the collected data. For example, the system can collect such data after the first run or later maintenance steps. This provides the possibility to collect data in a state wherein no problem should be expected. In general, such automatic system to generate the specific pressure drop deviation limit based on the real data collected provides many benefits. Especially, it allows to specifically tailor the pressure drop deviation limit according to the specific device enabling to significantly narrow down the limit specifically required.

A very beneficial possibility to realize the inventive method utilizes data regarding the operating condition to evaluate the pressure drop. According to further embodiments it is preferred that the detected pressure drop is measured along an operating condition of the continuous flow engine, wherein the detected pressure drop is compared to a related historic pressure drop providing a historic operating condition, wherein the related historic pressure drop is selected based on the historic operating condition, wherein the selection is based on a time frame condition and/or a deviation condition, wherein the time frame condition requires to select a historic pressure drop providing the lowest deviation within a predefined time frame, wherein the deviation condition requires to select a historic pressure drop based on a predefined operation condition deviation. For typical embodiments it is preferred that the time period provides a minimum distance from the detected pressure drop and an upper limit of such distance of the date of the historic pressure drop being distanced from the date of the detection of the pressure drop. For example, such time frame condition can be based on a time period like at least 2 days ago and at most 150 days ago defining a past time period. Utilizing a past time period providing a lower time limit of at least 1 day and an upper limit of at most 200 days is typically useful to easily analyze such pressure drop. The lower limit is typically preferred to be selected from a range from 1 to 30 days, more preferred from a range from 3 to 20 days, even more preferred from 6 to 13 days. The upper limit is typically preferred to be selected from the range from 40 to 200 days, more preferred from 60 to 150 days, even more preferred from the range from 70 to 110 days. Such operating conditions taken into account can be selected from a plurality of possible operating conditions. Herein, this is not limited to the typically most prominent operating conditions like the power output of a gas turbine. For example, the temperature measured inside the continuous flow engine or the humidity of the air being utilized by the air intake to provide the fluid medium in a gas turbine are surprisingly beneficial operating condition to be monitored. Utilizing such characteristics being typically disregarded as low importance characteristics allows to identify highly relevant pressure drops from historic databases or from a database collecting pressure drop over the recent time to provide indications of problems and evaluate the current state of the corresponding continuous flow engine that the very high reliability.

Such deviation condition can be, for example, the power output of such continuous flow engine being an energy generation device or a temperature of the fluid medium. Surprisingly, utilizing the fluid medium temperature is an especial easy and useful operating condition allowing to identify historic pressure drop data being beneficially utilized for comparison. In case no corresponding historic pressure drop is identified an identification action is triggered. For example, such identification action can include sending an information to an operator, requesting instructions from a database like a distributed database, automatically detecting a further pressure drop for analysis, or automatically selection a further pressure drop from a plurality of detected pressure drops.

For many embodiments it is typically preferred that the selection of the historic pressure drop is selected based on a combination of a time frame condition and a deviation condition. Herein, the selection is based on a deviation limit to identify a suitable historic pressure drop within a predefined time period.

For many applications it is typically preferred that data with regard to at least one operating condition is collected along the pressure drop. According to further embodiments it is preferred that the detected pressure drop is one of a plurality of detected pressure drops,
wherein the plurality of detected pressure drops include data with regard to at least one operating conditions of each pressure drop,
wherein the detected pressure drop to be evaluated is selected from the plurality of pressure drops based on the commonness of the operating condition. Typically, it is preferred that the pressure drop providing the most common operating condition is selected. This apparently simple idea allows to significantly increase the chance to, for example, identify a comparable historic pressure drop based on a time frame condition and/or a deviation condition.

Furthermore, it was noted that certain continuous flow engines are typically especially benefiting from the inventive method. According to further embodiments it is preferred that the continuous flow engine is a gas turbine, a steam turbine or a compressor, more preferred a gas turbine. Corresponding continuous flow engines benefit the most from such filter monitoring. Herein, the high complexity of such system is combined with the detailed experience with regard to such corresponding engines allowing to provide significant benefits when utilizing the inventive method.

For many applications is typically preferred that the pressure drop of specific elements is utilized. According to further embodiments it is preferred that the component is a filter, a nozzle or a component of a burner, more preferred a filter or a nozzle, even more preferred a filter. Monitoring a pressure drop at such elements of a continuous flow engine provides data being very beneficially utilized to improve the handling and monitoring of such continuous flow engine. Especially, it was noted that corresponding data can be utilized to also gain insight at different parts of the continuous flow engine. For example, it is possible to gain insight in failure modes and analyze root causes.

Furthermore, it was noted that it can be beneficial to monitor multiple neighboring elements as a whole. According to further embodiments it is preferred that the at least one pressure drop of the fluid medium is an overall pressure drop of at least two, more preferred at least four, sequenced elements potentially influencing the pressure. The term "sequenced" as used herein refers to the arrangement behind each other you of the fluid stream, wherein such sequenced elements follow each other. For example, such sequenced elements can be multiple filters arranged behind each other and fluid stream, wherein the filter is representative filter group utilized to remove impurities from the fluid stream. Such filter groups can be realized with comparable filters to ensure that in case of damage of one filter still all impurities to be removed are removed. However, typically it is preferred that such filter group provides a selection of different filters, wherein the filter size gets narrower with each filter and direction of the fluid stream to provide a continually improved filtering of the fluid medium.

In general, it was noted that for typical continuous flow engines beneficial to collect the pressure drop over a limited number of filters of the filter group. According to further embodiments it is preferred that the at least one pressure drop contains at least one filter pressure drop, wherein the at least one filter pressure drop refers to the pressure drop at a single filter or at most two sequenced filters. It was noted that collecting the pressure drop over too many filters significantly decrease the information possibly quietness context and splitting filter group set consisting of a plurality of filters into single pressure drops provides a surprising benefit to improve the overall evaluation possibly herewith.

Furthermore, it was noted that it is typically preferred that specific fluid media are to be monitored utilizing the inventive method. According to further embodiments it is preferred that the component is located in the air supply stream, fuel supply stream, oil supply, preferably in the air supply stream. Such air supply stream is, for example, utilized in the air supply of a gas turbine utilized for a compressor part in front of a turbine part and/or for the combustion unit, utilized in the air supply of steam turbine utilized to provide air to a boiler, and/or utilized for the air supply of a compressor.

For typical embodiments it is preferred that the pressure drop deviation limit is no constant value. According to further embodiments it is preferred that the pressure drop deviation limit is no constant value, wherein the pressure drop deviation limit is specified in relation to the specific method of operation of the continuous flow engine. Utilizing big data collected, for example, by a manufacturer or service provider for such continuous flow engine becomes possible to provide a pressure drop deviation limit being no constant value. Herein, the corresponding pressure drop deviation limit is defined in relation to a specific characteristic of the system. For example, it is typically very beneficial to specify the pressure drop deviation limit in relation to the current mode of operation of the continuous flow engine. It was noted that defining certain modes of operation like a change from state A to state B of requires that the pressure drop deviation limit is adapted accordingly to prevent false alarms.

To provide a possibility to the increase the interaction, for example, between the operator of such continuous flow engine and the service provider it can be preferred to collect corresponding data in a remote database. According to further embodiments it is preferred that the method contains the step of sending a dataset to a distributed database,
wherein the dataset contains data whether the detected pressure drop falls within the specified pressure drop deviation limit or outside the specified pressure drop deviation limit. Utilizing such distributed database is surprisingly beneficial to realize such embodiment. Continuous flow engines are highly specific, yet it is possible to transfer data from comparable continuous flow engines to each other. However, the expertise required to evaluate whether such data can be transferred to not and to collect such data is typically not available on the side of an owner of a single industrial plant utilizing such continuous flow engines. However, the corresponding providers of such continuous flow engines are typically able to make good use of data collected over decades to evaluate such detected pressure drop. Furthermore, utilizing such distributed database allows to utilize more processing power available at some central facility to analyze in more detail, enrich available datasets, and/or countercheck with further data to provide the best evaluation possible.

Identifying reference data stored in a historic database like a local or remote database storing such data or a database storing simulated data like a local or remote database storing such data can be achieved by different means. Naturally, the corresponding data can also be indexed to simplify access and identification. However, also from an unstructured database corresponding data can be retrieved. For example, the corresponding search can be based on the volume flow and/or mass flow of the fluid stream at the corresponding time and search for comparable data, wherein the further conditions of the corresponding process at that time are taken into account. Herein, it was noted that the third party having extensive experience in this matter can provide a significant benefit in this context. Even generic clustering according to certain typical relevant characteristics can be highly beneficial. For example, certain parts of such database can be associated to a specific type of component associated with such pressure drop. Based on the data what components are utilized in the local industrial plant certain parts of the database are labeled being point of interest and can be reviewed from such party in case corresponding data is required. This allows to significantly reduce the amount of data to be reviewed thus increases significantly the time required to identify corresponding data and react to unknown situations.

Utilizing the inventive method furthermore allows to make good use of smart contracts to, for example, further increase the involvement of a third party providing, for example, the maintenance of the continuous flow engine. According to further embodiments it is preferred that the method contains the step of activating a smart contract based on whether the detected pressure drop falls within the specified pressure drop deviation limit or outside the specified pressure drop deviation limit. Typically, it is beneficial to automatically trigger, for example, a service in case corresponding deviations are detected. Herein, such deviation does not necessarily has to be a single value falling outside of the predefined range. For example, it can also be a consistent trend of the measured value like the value deviating more and more from the expected value over time.

Such possibility can also be utilized to implement improved service concepts relying on case dependent payments. Herein, different means can be utilized to ensure a corresponding payment model possibly be realized and being acceptable to the customer. For example, the present invention can furthermore contain the step to store data in a block chain. However, further means to securely store corresponding data are available to the expert. In the end, the system can be provided utilizing the inventive method to provide a transparent monitoring and providing proof of the benefit accomplished by corresponding maintenance actions or service provided like access to the remote historic database being granted or updated simulation models being implemented allowing to bill corresponding improvements for the customer. Herein, the method contains the step of storing data required to evaluate the benefit provided by the inventive method securely in a database, preferably in a remote database like the distributed database. This allows to technically improve such system and provides specifically tailored solutions depending on the specific case.

To provide an improved assessment of the continuous flow engine it was furthermore noted that it is typically beneficial to provide a long-term monitoring. According to further embodiments it is preferred that the method contains monitoring the pressure drop over a period of time, wherein the average increase and/or decrease of the pressure drop is evaluated whether it corresponds to the expected behavior. For example, a graphical analysis can take place. Herein, the gradient of the pressure drop over time is evaluated whether it is in conformity with simulated and/or historic pressure drop data of such situation. Such evaluation can, for example, contain whether the gradient deviates from the expected gradient more than a predefined value. Herein, in typical embodiments it is preferred that the period utilized to calculate such gradient is at least 1 minutes, more preferred at least 5 minutes, even more preferred at least 20 minutes. According to further embodiments it is preferred to additionally or alternatively utilize a long term monitoring. Herein, the period utilized to calculate such gradient is at least 1 day, more preferred at least 5 days, even more preferred at least 13 days.

Additionally or alternatively the aforementioned monitoring over time can also be realized to evaluate an curve progression in said timeframe. It was noted that corresponding curves provide a specific fingerprint that allows to assign the specific curve progression to specific state of the corresponding element. For example, based on the wearout of the walls or clogging of the filter certain peaks the appearing or expected peaks are flattened out resulting in the possibility to identify state based on such evaluation.

According to further embodiments it is preferred that the method contains monitoring the pressure drop over a period of an action, wherein the increase and/or decrease of the pressure drop is evaluated whether it corresponds to the expected behavior. Such action can be, for example, a change of the speed of the continuous flow engine, partial cooldown, a change of the fuel, a change of the air intake temperature, and the like. It was noted that corresponding changes in the continuous flow engine are accompanied by a change in the pressure drop providing a profile closely depending on the corresponding change. It was noted that even minor problems can be detected very early at least by comparing the profiles to each other and analyzing abnormalities becoming visible in this context.

To provide the possibility of improved interaction and connectivity within an industrial plant it is also typically preferred to collect data of different components. According to further embodiments it is preferred that the pressure drop for at least three, even more preferred at least five, components is determined. Typically, it is preferred that a corresponding evaluation with regard to the benefit of servicing and/or replacing the filter is provided for the aforementioned different components. Such system can be integrated into multiple parts of the continuous flow engine allowing to, for example, request a corresponding evaluation as single request by an operator to get an overview whether a maintenance step might be planned or not. Surprisingly, it was noted that collecting such data for such components even being very simple components is especially useful and utilized for an industrial plant utilizing at least one continuous flow engine. It was noted that the corresponding information gives a very surprising inside in the real utilization of such continuous flow engine for the person skilled in the art. Such skilled person is able to gain an understanding of the current state as well as what to expect based on such real data and the more abstract information like the runtime since the last maintenance leading to a significantly improved handling and security.

Furthermore, it was noted that it can be beneficial for typical applications to monitor the pressure drop of multiple components of the same continuous flow engine simultaneously. According to further embodiments it is preferred that the method is utilized for the pressure drop of at least two, more preferred at least three, even more preferred at least five, components, wherein the components are preferably located within the same continuous flow engine, wherein the method contains the step of sending a request to a computer program product utilized to execute the method, wherein the request triggers an evaluation process, wherein the evaluation process contains evaluating the specified pressure drop deviation limit of each of the at least two components separately based on the characteristics of the corresponding component, wherein the evaluation contains when the corresponding pressure drops did not fall anymore into the corresponding specified pressure drop deviation limit and/or in what order the corresponding pressure drops do not fall within said specified pressure drop deviation limit anymore is provided. For example, such information can be provided to an operator and/or to a database. Preferably, an operator is typically informed about this matter. It was noted that this allows to easily gain an oversight whether the change of the state of the corresponding components change significantly. For example, in case of some unexpected unpredicted worsening of one of multiple filter elements each providing an own kind of pollution speed a change of the order of the filter elements failing such narrowing of the specified pressure drop deviation limits provides an easy to recognize feature to detect a problem in an early stage.

The benefit obtained by utilizing the inventive method can further be increased by utilizing the required data to provide a monitoring extending over a specific time period. According to further embodiments it is preferred that the method contains the step of monitoring the pressure drop of the component over a period of time. For example, such period of time can be at least 30 seconds, more preferred at least is at least two minutes, even more preferred at least five minutes. Typically, it is preferred that such prolonged monitoring is realized for a specific utilization step of the continuous flow engine. For example, during a startup or a cool down of the continuous flow engine. Surprisingly, it was noted that correlating such collected data with other parameters of the continuous flow engine like the speed of starting up the continuous flow engine or the cooldown rate of a cooldown process provides early indications of problems of very different parts of the continuous flow engine. Herein, the specific behavior of the pressure drop allows to identify certain developments and problems at a very early stage. However, it is also possible to monitor the pressure drop over such period of time to provide a mean pressure drop depending on the situation. Such mean pressure drop can also be utilized to easily compare the real behavior with an expected behavior to identify problems.

Such monitoring over a time period can be coupled with monitoring the response of the corresponding component related to a certain action. According to further embodiments it is preferred that a pressure drop response behavior is determined, wherein the pressure drop response behavior is the change of the pressure drop depending on the specific situation over a period of time, wherein the pressure drop response behavior is compared to a simulated pressure drop response behavior or a historic pressure drop response behavior stored in a database. Surprisingly, it was noted that the change of the pressure drop in certain situations provide a fingerprint reflecting the change of the pressure drop based on the situation like increasing the rotation speed of the continuous flow engine during a start up process or the like. Such fingerprints are easily compared to existing data to provide a real time monitoring. Such monitoring is not only very efficient with regard to the process power required, but also allows to identify irregularities at a very early stage. For example, the pressure drop available is compared to historic pressure drop data in a comparable situation or pressure drop data collected over time before. For example, the identification of a comparable historic dataset can be based on the volume flow, wherein a comparable volume flow is searched for in the historic datasets being available. Such past volume should not exceed the current volume unless, for example, a change based on a maintenance step has taken place at the corresponding element monitored. For example, exchanging the corresponding filter might result in a corresponding increase, however, without such reasoning such change indicates a possible problem that has to be closely reviewed.

In general, it is preferred to establish a pressure drop database collecting the monitored pressure drop along with data like the operating conditions of the continuous flow engine. Such data can be utilized to establish a historic database to be used in the future. However, such data can also be relevant for reviewing the state of the continuous flow engine and/or identify reasons for problems that had occurred when tracking down reasons for damages and possibilities to prevent such problems in future.

With regard to the monitoring over extended time it was noted that it is typically beneficial for many applications to extend the monitoring to multiple components simultaneously. According to further embodiments it is preferred that the pressure drops at least three components, even more preferred at least five components, even more preferred at least 10 components, are monitored over a period of time. Surprisingly, it is also beneficial to simultaneously monitor multiple components with regard to the pressure drop at the corresponding components. For example, it was noted that based of the interrelation of even different fluid medium streams it becomes possible to identify a misbehavior of the continuous flow engine based on deviations of specific parts of the engine resulting in an unexpected behavior of specific components being able to be identified that way.

A further possibility to improve the possibilities provided by the inventive method utilizes historic data. According to further embodiments it is preferred that the method contains the step of monitoring a pressure drop change,
wherein the method contains the step of retrieving historic data from an historic database,
wherein the historic data is utilized to evaluate a pressure drop change with regard to an irregular behavior. For example, such historic data can relate to a past state of the corresponding continuous flow engine or a comparable continuous flow engine. Herein, a corresponding historic data can be selected based on additional characteristics like internal characteristics and/or external characteristics. Internal characteristics are, for example, characteristics of other components of the continuous flow engine being in functional connection to the corresponding component providing the pressure drop. External characteristics are associated to the environment surrounding an industrial plant containing the continuous flow engine. For example, such deviations of the atmosphere are contaminations resulting from increased amounts of fine sand contained therein or smoke resulting from field being burned down in the vicinity. It was surprisingly beneficial to utilize data regarding external characteristics. The influence on highly advanced continuous flow engine depending in some way from the surrounding atmosphere is surprisingly significant. For typical applications it is preferred to utilize a weighted regression method to evaluate the pressure drop change and identify the irregular behavior.

Additionally or alternatively to the historic data it is possible to utilize simulations to gain additional insight that can be utilized for the inventive method. According to further embodiments it is preferred that the method contains the step of simulating the continuous flow engine using a virtual model of the continuous flow engine, wherein the virtual model includes a pressure drop, wherein the method includes triggering an action in case the detected pressure drop deviates more than a specified limit from the pressure drop provided by the virtual model. Such action can be, for example, creating an alarm, sending a dataset to a database, triggering an update of the virtual model and/or requested data from a database, preferably a remote database like a distributed database.

According to further aspect the present invention refers to a system adapted to be utilized in an inventive method comprising a processor and a non-transitory computer readable medium comprising computer executable instructions that when executed by the processor cause the system to perform operations comprising:
receiving data from a sensor directly or indirectly detecting the pressure drop of a fluid medium passing through a component of the continuous flow engine
evaluating the pressure drop based on historic pressure drop data and/or simulated pressure drop data, preferably based on historic pressure drop data,
creating an alarm in case the detected pressure drop deviates from the historic pressure drop data and/or the simulated pressure drop data more than specified pressure drop deviation limit.

According to a further aspect the present invention refers to an upgrade kit containing an inventive system. Such upgrade kit is typically especial useful as the inventive system can be generalized to be usable for many types of continuous flow engines like types of gas turbines. Such upgrade kit containing the inventive system can contain a historic database and a simulation unit. Herein, the inventive upgrade kit can be connected to the existing data infrastructure of the industrial plant. Configuring it to automatically scan for relevant components and their data sources in the data infrastructure allows to significantly decrease the effort required to implement such upgrade kit.

According to further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to further aspect the present invention refers to a use of an inventive method, an inventive system, an inventive upgrade kit or an inventive computer program product to monitor and/or control a continuous flow engine.

It was noted that such use is very beneficial for typical application to realize failure mode and effects analysis. According to further embodiments it is preferred that the monitoring contains a failure mode and effects analysis based on the pressure drop data. Such use provides a surprisingly beneficial low amount of processing power and highly reliable and detailed information with regard to the continuous flow engine.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

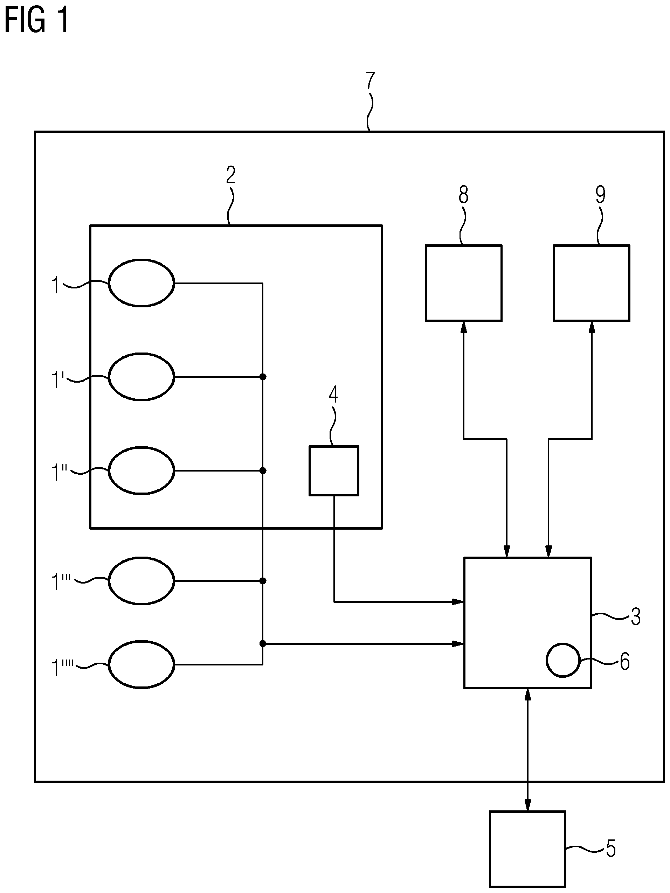

Fig. 1 shows a scheme of an industrial plant containing a continuous flow engine being adapted to utilize the inventive method. Herein, five pressure drop data sources 1, 1', 1", 1''', 1'''' are exemplarily shown. Three are located in a continuous flow engine 2. Two pressure drop data sources 1''', 1'''' are located in the supporting structure being connected to the continuous flow engine 2. Said pressure data sources 1, 1', 1", 1''', 1'''' are adapted to detect a pressure drop of a fluid medium passing through The data provided by the pressure data sources 1, 1', 1", 1''', 1'''' are transmitted to the system 3 processing the data. Furthermore, system 3 receives data from the control unit 4 containing operating data of the continuous flow engine 2. The pressure drop data received is utilized with historic data and simulated data to detect deviations indicating an error or abnormal behavior. Surprisingly, that situation can be identified with the very high reliability utilizing such reference pressure drop data and a specified pressure drop deviation limit.

The pressure drop deviation limit was generated by analyzing historic pressure drop data to evaluate typical limits such pressure drop typically provides. Herein, the historic data being utilized to generate the pressure drop deviation limit is not stored locally but is located on a remote database provided by third party being responsible for manufacturing and servicing the continuous flow engine. Taking into account the enormous amount of data collected over decades it is possible to provide highly reliable pressure drop deviation limit for almost any possible situation. However, to also provide guidance for extreme situations like complete failures and even catastrophic damages the historic data is furthermore enriched by simulated data to fill out blank areas in such collected data typically never being expected to occur.

To provide further possibilities to identify new and unknown situations the system 3 is connected to a local historic database 8 as well as a local simulation unit 9. While the local historic database 8 continuously collects data of the industrial plant 7 and provides it, for example, to the system 3 the simulation unit 9 provides data on demand to solve specific problems occurring or fill up blanks in the collected data. Although, it is typically preferred to rely on a remote historic database and a remote simulation unit of a third party like the manufacturer in such context such arrangement is also quite beneficial. Especially, in case local modifications have been performed providing the industrial plant within adaption differing from the original layout, wherein such modification cannot or should not be communicated to the party. Surprisingly, it is possible to provide an automatic system continuously adapting the system based on the corresponding needs and situation, wherein also some generic adaptive pressure drop deviation limit can be specifically adapted to the real situation in the industrial plant 7 by relying on the local data stored in the historic data base 8 and comparing certain guidelines provided by such remote third-party with simulations provided by the simulation unit 9. This allows to provide a highly tailored adapted system being able to detect problems with the high reliability and speed.

The system 3 is furthermore provided with a smart contract 6 being triggered in case a specific condition is met. Herein, one smart contract 6 triggers exchanging data with the remote database 5 resulting of forwarding status information to said remote database 5. This is utilized to update the remote database 5 with the latest status, past utilization and recent developments of the continuous flow engine 2. This can be utilized to update the predictive behavior and wear out of the continuous flow engine 2 to adapt the maintenance schedule and planning to the real situation. Furthermore, further smart contract 6 is triggered in case the deviation is detected resulting in an unknown situation. Such situation is communicated to the remote database 5 allowing an operator at a central location to decide whether this situation is forwarded to a third party having more experience and/or insight in said situation. In case the situation is deemed to be grave the smart contract 6 directly forwards the data to set third-party while sending only a notification to the remote database 5 notifying that such action has been performed. While it is possible to completely deactivate such overruled forwarding of data it was noted that typically this is very beneficial to immediately react to problematic situations.

Furthermore, corresponding datasets relating to the utilization of the continuous flow engine are sent to the remote database 5 on regular basis. Herein the corresponding datasets contain data whether the detected pressure drops fall within the specified pressure drop limit or outside their range. This feature is typically beneficial to provide some remote monitoring and surveillance of the corresponding continuous flow engines as well as enabling business models like maintenance and service on demand requiring a continuous evaluation whether the originally conditions are met that have been agreed upon.

The arrangement as shown in figure 1 furthermore makes best use of the multiple pressure drops being available. It was noted that specific situations are determined being the most reliable way by specific pressure drops resulting in that depending on the operating condition of the continuous flow engine and active selection of the pressure drop or pressure drops to be reviewed provides a significant increase of the reliability and speed of detection of abnormal behavior. For example, utilizing the detected pressure drop associated with the air intake is very beneficial to monitor the behavior during situations of extensive use and high rotation speed of the continuous flow engine. In this context, it is preferred that the continuous flow engine 2 itself contains multiple sources of pressure drop data. It is possible to also utilize a plurality of pressure drop data sources in the supporting structure being arranged in connection to the continuous flow engine 2. Corresponding pressure drop data sources allow to at least indirectly determining the current state of the continuous flow engine. However, it is typically preferred that the continuous flow engine 2 itself also contains multiple corresponding pressure drop data sources.

Furthermore, the example as shown makes use of the monitoring of the pressure drops over time. Herein, the corresponding behavior and development of the pressure drops over a defined period of time or and/or period of action like a change of the utilization of the continuous flow engine is evaluated. Comparing the profile of the change of the pressure drops allows to detect even minor problems at a very early stage. Also, in this context it is highly beneficial to utilize the historic data to compare it to past situations and evaluate the current state and possible problems. Surprisingly, it is furthermore possible to simulate corresponding deviations with the simulation unit 9 and detect even unknown problems and situations with the satisfying reliability. Corresponding indications can be utilized to review certain elements during the next maintenance allowing to verify such problem. Corresponding data can furthermore be fed into the historic database 8 to serve as new indication and reference.

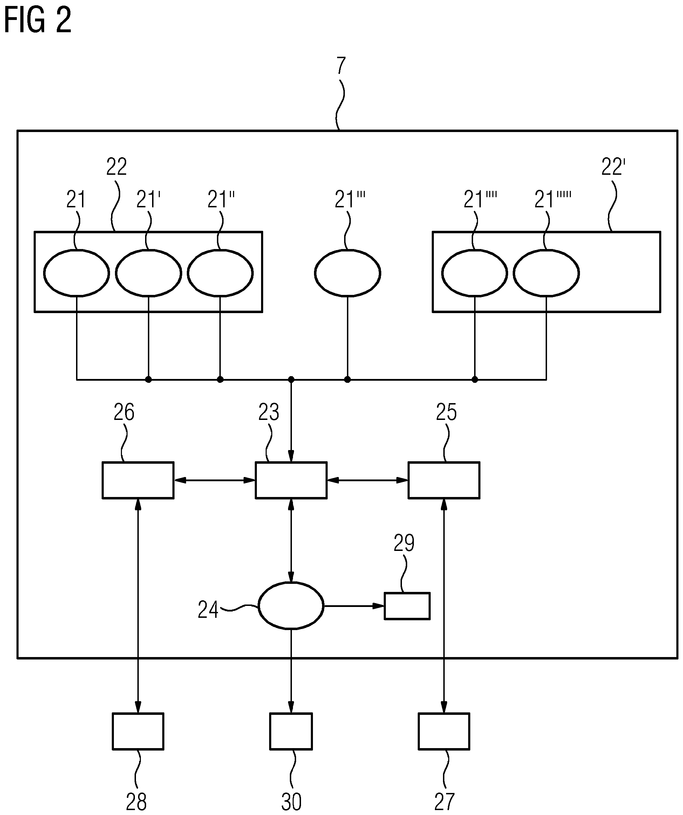

Figure 2 shows a scheme of the inventive method as realized the industrial plant 7. Herein, the system is realized in figure 1 is shown in more detail. Exemplarily six sources of pressure drop data 21, 21', 21", 21''', 21'''' are shown. Three are located in the first continues flow engine 22 and further two located in a second continuous flow engine 22'. The remaining source is located in the supporting structure being connected to the continuous flow engines 22, 22'. Said sources of pressure drop data 21, 21', 21", 21''', 21'''' send their data to a processing unit 23 being responsible for evaluating the corresponding data. During this evaluation the processing unit 23 retrieves historic data 25 as well as simulation data 26 from a local historic database and the local simulation unit.

The historic database on the other hand performs an historic data exchange 28 within remote historic database to retrieve new relevant data on a regular basis, on demand, or based on upgrades or modifications introduced into the continuous flow engines 22, 22'.

The simulation unit also performs a simulation data exchange 27 with a remote simulation database to retrieve updates and information with regard to the utilized models as well as evaluations of corresponding simulations. Such exchange is only executed on the request basis and has to be validated by the local operator.

In case the processing unit 23 detect such abnormal behavior creates an alarm 24 being forwarded within the industrial plant to be reviewed. For example, said alarm is forwarded to an operator 29 being responsible for the continuous flow engines 22, 22'. The system is shown in figure 2 also includes a feedback mechanism allowing the reaction of the alarm 24 being fed back into the processing unit 23 to be considered during future evaluations. Furthermore, the alarm 24 is forwarded to be remotely stored 30 in a remote database.

The present invention was only described in further detail for explanatory purposes. However, the invention is not to be understood being limited to these embodiments as they represent embodiments providing additional benefits to solve specific problems or fulfilling specific needs. The scope of the protection should be understood to be only limited by the claims attached.

## Claims

1. Method of controlling a continuous flow engine (2, 22, 22'),
wherein the continuous flow engine (2, 22, 22') contains a fluid medium passing through a component of the continuous flow engine (2, 22, 22'),
wherein the method contains the steps of
- detecting at least one pressure drop of the fluid medium passing through a component of the continuous flow engine (2, 22, 22'),
- evaluating the pressure drop based on historic pressure drop data and/or simulated pressure drop data, preferably based on historic pressure drop data,
- creating an alarm (24) in case the detected pressure drop deviates from the historic pressure drop data and/or the simulated pressure drop data more than specified pressure drop deviation limit.

2. Method according to claim 1, wherein the detected pressure drop is one of a plurality of detected pressure drops,
wherein the plurality of detected pressure drops include data with regard to at least one operating conditions of each pressure drop,
wherein the detected pressure drop to be evaluated is selected from the plurality of pressure drops based on the specific operating condition.

3. Method according to any of claims 1 to 2, wherein the pressure drop deviation limit is no constant value,
wherein the pressure drop deviation limit is specified in relation to the specific method of operation of the continuous flow engine (2, 22, 22').

4. Method according to any of claims 1 to 3, wherein the continuous flow engine (2, 22, 22') is a gas turbine, a steam turbine or a compressor, more preferred a gas turbine.

5. Method according to any of claims 1 to 4, wherein the component is a filter, a nozzle or a component of a burner, more preferred a filter or a nozzle, even more preferred a filter.

6. Method according to any of claims 1 to 5, wherein the component is located in the air supply stream, fuel supply stream, oil supply, preferably in the air supply stream.

7. Method according to any of claims 1 to 6, wherein the method contains the step of sending a dataset to a distributed database,
wherein the dataset contains data whether the detected pressure drop falls within the specified pressure drop deviation limit or outside the specified pressure drop deviation limit.

8. Method according to any of claims 1 to 7, wherein the method contains monitoring the pressure drop over a period of time,
wherein the average increase and/or decrease of the pressure drop is evaluated whether it corresponds to the expected behavior.

9. Method according to any of claims 1 to 8, wherein the method is utilized for the pressure drop off at least two,
wherein the components are preferably located within the same continuous flow engine (2, 22, 22'),
wherein the method contains the step of sending a request to a computer program product utilized to execute the method, wherein the request triggers an evaluation process, wherein the evaluation process contains refusing the specified pressure drop deviation limit of each of the at least two components separately based on the characteristics of the corresponding component,
wherein that the regard to when the corresponding pressure drops did not fall anymore into the corresponding specified pressure drop deviation limit and/or in what order the corresponding pressure drops did not fall within said specified pressure drop deviation limit anymore is provided.

10. Method according to any of claims 1 to 9, wherein the method contains the step of monitoring the pressure drop of the component over a period of time.

11. Method according to any of claims 1 to 10, wherein a pressure drop response behavior is determined,
wherein the pressure drop response behavior is the change of the pressure drop depending on the specific situation over a period of time,
wherein the pressure drop response behavior is compared to a simulated pressure drop response behavior or a historic pressure drop response behavior stored in a database.

12. Method according to any of claims 1 to 11, wherein the method contains the step of monitoring a pressure drop change,
wherein the method contains the step of retrieving historic data from an historic database (8),
wherein the historic data is utilized to evaluate a pressure drop change with regard to an irregular behavior.

13. A system (3) adapted to be utilized in a method according to any of claims 1 to 12 comprising a processor and a non-transitory computer readable medium comprising computer executable instructions that when executed by the processor cause the system (3) to perform operations comprising:
receiving data from a sensor directly or indirectly detecting the pressure drop of a fluid medium passing through a component of the continuous flow engine (2, 22, 22') evaluating the pressure drop based on historic pressure drop data and/or simulated pressure drop data, preferably based on historic pressure drop data,
creating an alarm (24) in case the detected pressure drop deviates from the historic pressure drop data and/or the simulated pressure drop data more than specified pressure drop deviation limit.

14. Computer program product, tangibly embodied in a machine-readable storage medium, including instructions operable to cause a computing entity to execute a method according to any of claims 1 to 12.

15. Use of a method according to any of claims 1 to 12, a system (3) according to claim 13, or a computer program product according to claim 14 to monitor and/or control a continuous flow engine (2, 22, 22').
